# EUROPÄISCHE PATENTSCHRIFT

(11) **EP 0 766 033 B1**
(45) Veröffentlichungstag und Bekanntmachung des Hinweises auf die Patenterteilung: **17.02.1999**
(21) Anmeldenummer: 96115202.2
(22) Anmeldetag: 20.09.1996
(51) Int. Cl.: F16L 37/084, F16L 37/088

(54) **Steckkupplung für Druckmittelsysteme**
Quick coupling for pressurized fluid systems
Rapide rapide pour systèmes de fluide sous pression

(30) Priorität: 29.09.1995 DE 19536333
(43) Veröffentlichungstag der Anmeldung: 02.04.1997
(73) Patentinhaber: Armaturenfabrik Hermann Voss GmbH + Co., 51688 Wipperfürth (DE)
(72) Erfinder: Hagen, Harald Dipl.-Ing., 51688 Wipperfürth (DE); Kaminski, Volker, 58553 Halver (DE); Berg, Manfred, 51688 Wipperfürth (DE)
(74) Vertreter: Patentanwälte Dr. Solf & Zapf

(56) Entgegenhaltungen:
- EP-A- 0 226 689
- EP-A- 0 330 350
- DE-A- 2 922 869
- FR-A- 2 437 546

## Beschreibung

Die vorliegende Erfindung betrifft eine Steckkupplung für insbesondere pneumatische Druckmittelsysteme, bestehend aus zwei Kupplungsteilen, und zwar einem Gehäuseteil und einem Steckerteil, wobei das Steckerteil mit einem Steckerschaft über mindestens eine in einer Ringnut des einen Kupplungsteils sitzende und mit einer umfänglichen Dichtfläche des anderen Kupplungsteils zusammenwirkende Umfangsdichtung abgedichtet in eine Aufnahmeöffnung des Gehäuseteils einsteckbar und mittels einer Verriegelungseinrichtung gegen Lösen arretierbar ist, wobei die Verriegelungseinrichtung derart ausgebildet ist, daß eine teilgesteckte Vorarretierstellung und eine ganz gesteckte Vollarretierstellung gewährleistet sind, wobei in der Vorarretierstellung eine derart unvollständige Abdichtung vorliegt, daß im Falle einer Druckbeaufschlagung mit einem Druckmedium, insbesondere Druckluft, eine definiert begrenzte, wahrnehmbare Leckage, insbesondere in Form eines akustisch wahrnehmbaren Leckgeräusches, auftritt, und wobei in der Vollarretierstellung über die an der Dichtfläche anliegende Umfangsdichtung eine vollständige, druckdichte Abdichtung vorliegt.

Derartige Steckkupplungen werden beispielsweise in Kraftfahrzeug-Bremssystemen, inbesondere bei LKW-Luftdruckbremsanlagen, eingesetzt. Speziell - aber natürlich nicht nur - bei diesem Anwendungsfall besteht das Problem, daß in manchen Fällen, z.B. bei ungünstigen Platzverhältnissen bzw. Einbausituationen, vom Monteur beim Stecken nicht sorgfältig genug auf ein korrektes, vollständiges Stecken geachtet wird, so daß in der Praxis Prüfvorgänge eingeschaltet werden müssen, um zu verhindern, daß bei einer Druckbeaufschlagung, beispielsweise beim Aufbau von Bremsdruck, die Kupplung plötzlich ungewollt getrennt wird.

Aus der EP-Bl-O 226 689 ist eine gattungsgemäße "Kupplungsvorrichtung" bekannt, bei der zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Dabei ist in dieser Vorraststellung eine Undichtigkeit derart gewährleistet, daß dieser Zustand akustisch durch ein Leckgeräusch wahrnehmbar ist, ohne daß es zu einem vollständigen, plötzlichen Druckabfall kommen kann. Die Kupplung kann dann bei Auftreten des Leckgeräusches weiter in die korrekt abgedichtete und arretierte "Vollraststellung" überführt werden. Bei der bekannten Kupplungsvorrichtung wird die Leckage in der Vorraststellung dadurch gewährleistet, daß zwischen der in der Ringnut des einen Kupplungsteils sitzenden Umfangsdichtung und dem anderen Kupplungsteil bzw. dessen Dichtfläche ein axialer Abstand und somit ein entsprechender Ringspalt vorhanden ist. Dabei kann aber das Problem auftreten, daß durch die Leckageströmung die Umfangsdichtung aus der Ringnut "herausgerissen" (ausgewaschen bzw. ausgeblasen) wird, so daß nach einem anschließenden Überführen der Kupplung in die Vollraststellung keine druckdichte Abdichtung mehr gewährleistet ist.

Der vorliegenden Erfindung liegt die Aufgabe zugrunde, eine gattungsgemäße Steckkupplung zu schaffen, bei der eine einwandfreie Dichtungsfunktion in der Vollarretierstellung auch dann gewährleistet bleibt, wenn es in der Vorarretierstellung zu Druckbeaufschlagungen und dadurch bedingten definierten Leckagen gekommen ist.

Erfindungsgemäß wird dies dadurch erreicht, daß der Bereich der Umfangsdichtung und/oder der Dichtfläche derart ausgebildet ist, daß die in der Ringnut des einen Kupplungsteils sitzende Umfangsdichtung in der Vorarretierstellung über umfänglich verteilt voneinander beabstandet angeordnete Anlagestellen in radialer Richtung an dem anderen Kupplungsteil anliegt und jeweils in Umfangsrichtung zwischen den Anlagestellen axiale Leckagepfade gebildet sind.

Durch die erfindungsgemäße radiale Anlage der Umfangsdichtung in den umfänglich verteilten Anlagestellen wird bereits in der Vorarretierstellung eine zonale Verspannung bzw. Kammerung der Umfangsdichtung in ihrer Ringnut erreicht, wodurch vorteilhafterweise eine sehr hohe Sicherheit gegen ein "Ausblasen" bzw. "Auswaschen" der Dichtung aus der Ringnut erreicht wird. Dennoch bleibt die Funktion der "definierten, wahrnehmbaren Leckage" in der Vorarretierstellung erhalten. Wird die Kupplung dann von der Vorarretierstellung durch weitergehendes Einstecken in die Vollarretierstellung überführt, so wird durch die sicher in ihrer Position innerhalb der Ringnut gehaltene Umfangsdichtung stets die druckdichte Abdichtung gewährleistet.

In einer ersten vorteilhaften Ausführungsform der Erfindung wird der erfindungsgemäße Effekt durch eine besondere Ausgestaltung der Umfangsdichtung erreicht, die hierzu aus einem speziellen elastischen Profilring besteht, der in zwei axial benachbarte Bereiche unterteilt ist, und zwar in einen Dichtbereich mit einem über seinen Umfang hinweg im wesentlichen konstanten Ringquerschnitt sowie einen Leckagebereich aus einander im Umfangsrichtung abwechselnden, die Anlagestellen bildenden Anlageabschnitten und radialen, die Leckagepfade bildenden Leckageaussparungen. Der Profilring ist dann in der Vorarretierstellung mit dem Dichtbereich im Bereich eines zwischen dem Steckerschaft und der Aufnahmeöffnung gebildeten, an die Dichtfläche angrenzenden, erweiterten Ringspaltes und mit dem Leckagebereich axial im Bereich der in der Vollarretierstellung mit dem Dichtbereich dichtend zusammenwirkenden Dichtfläche des jeweiligen Kupplungsteils angeordnet. Hierdurch kann eine Leckageströmung in der Vorarretierstellung im Bereich der Dichtfläche axial durch die Leckageaussparungen und dann geringfügig radial nach außen und axial am Dichtbereich der Umfangsdichtung vorbei nach außen entweichen.

In einer zweiten Ausführungsform der Erfindung ist alternativ dazu eine spezielle Ausgestaltung des die Dichtfläche aufweisen Kupplungsteils vorgesehen, wobei vorteilhafterweise eine im wesentlichen "normale" Umfangsdichtung, insbesondere ein üblicher O-Ring, verwendet werden kann. Hierzu weist das die Dichtfläche aufweisende Kupplungsteil der Dichtfläche axial benachbart einen Leckagebereich mit einander in Umfangsrichtung abwechselnden Anlageabschnitten und radialen Leckageaussparungen auf. Die Umfangsdichtung ist dann in der Vorarretierstellung im Leckagebereich und in der Vollarretierstellung im Bereich der angrenzenden Dichtfläche angeordnet.

In einer dritten Ausführungsform sind die Dichtfläche und der Leckagebereich am Außenumfang des Steckerschaftes gebildet, wobei der Leckagebereich sehr einfach und mit geringem Herstellungsaufwand beispielsweise durch eine umfängliche Rändelung aus im wesentlichen axial verlaufenden, stegartigen Erhebungen und dazwischenliegenden, die Leckagepfade bildenden, rillenartigen Vertiefungen gebildet sein kann. Die Umfangsdichtung sitzt hierbei in einer Innenringnut innerhalb der Aufnahmeöffnung des Gehäuseteils.

Weitere vorteilhafte Ausgestaltungsmerkmale der Erfindung sind in den Unteransprüchen sowie der folgenden Beschreibung enthalten.

Anhand von einigen bevorzugten Ausführungsbeispielen soll im folgenden die Erfindung näher erläutert werden. Dabei zeigen:
- Fig. 1: eine erste Ausführungsform einer erfindungsgemäßen Steckkupplung im Axialschnitt, wobei in der linken Figurenhälfte die ganz gesteckte Vollarretierstellung und in der rechten Figurenhälfte die teilgesteckte Vorarretierstellung veranschaulicht sind,
- Fig. 2: eine gegenüber Fig. 1 vergrößerte Darstellung einer speziellen Umfangsdichtung in einer Ansicht in Pfeilrichtung II gemäß Fig. 1,
- Fig. 3: einen Querschnitt durch die Umfangsdichtung in der Schnittebene III-III gemäß Fig. 2,
- Fig. 4: einen Querschnitt durch die Umfangsdichtung in der Schnittebene IV-IV in Fig. 2,
- Fig. 5: eine zweite Ausführungsform der erfindungsgemäßen Steckkupplung in zu Fig. 1 analoger Darstellung, wobei ebenfalls links die Vollarretierstellung und rechts die Vorarretierstellung dargestellt sind,
- Fig. 6: einen Querschnitt durch die Steckkupplung in der Schnittebene VI-VI gemäß Fig. 5 (wiederum links Vollarretier- und rechts Vorarretierstellung),
- Fig. 7: eine der Fig. 5 entsprechende Darstellung der Steckkupplung in einer vorteilhaften Ausführungsvariante,
- Fig. 8: eine dritte Ausführungsform der erfindungsgemäßen Steckkupplung, wiederum in zu Fig. 1 analoger Darstellung mit Vollarretierstellung (links) und Vorarretierstellung (rechts), und
- Fig. 9: einen Querschnitt durch das Steckerteil im Leckagebereich des Steckerschaftes, d.h. in der Ebene IX-IX gemäß Fig. 8.

In den verschiedenen Figuren der Zeichnung sind gleiche Teile stets mit den gleichen Bezugszeichen versehen und werden daher im folgenden in der Regel jeweils nur einmal beschrieben.

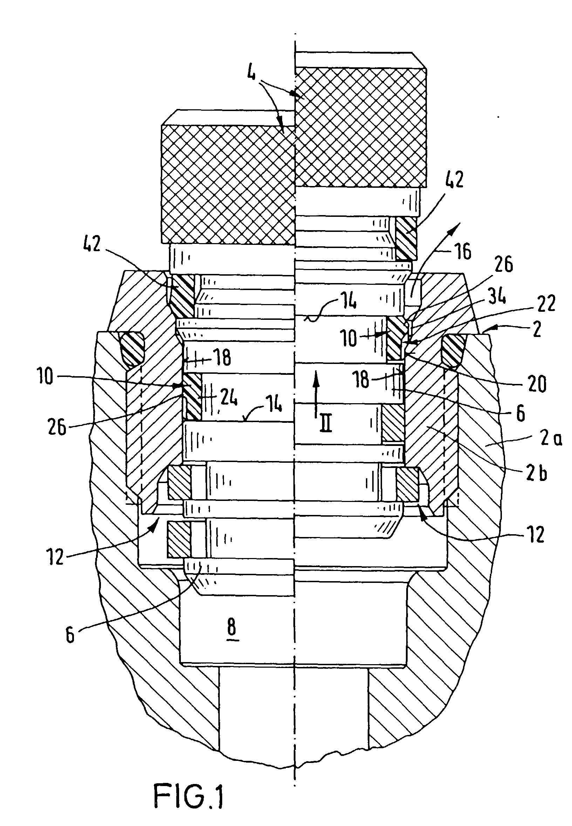

Wie sich aus Fig. 1, 5, 7 und 8 jeweils ergibt, besteht eine erfindungsgemäße Steckkupplung aus einem Gehäuseteil 2 und einem Steckerteil 4. Das Steckerteil 4 ist mit einem Steckerschaft 6 in eine Aufnahmeöffnung 8 des Gehäuseteils 2 einsteckbar und hierbei über mindestens eine Umfangsdichtung 10 gegen die Aufnahmeöffnung 8 abgedichtet sowie über eine Verriegelungseinrichtung 12 gegen Lösen arretierbar.

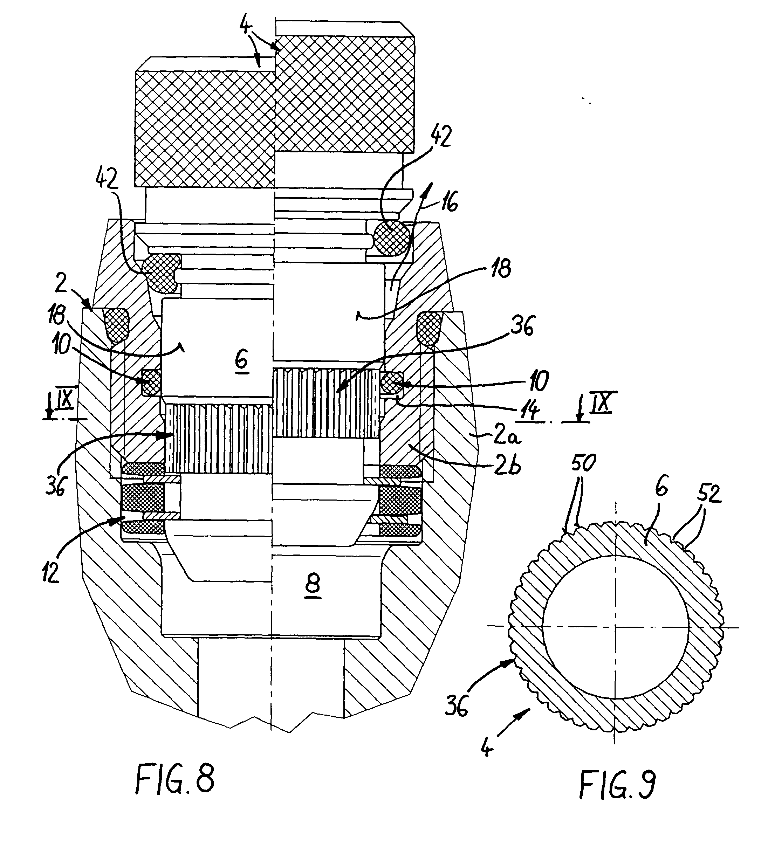

Die Verriegelungseinrichtung 12 ist in den Ausführungsbeispielen derart ausgebildet, daß einerseits eine teilgesteckte Vorraststellung (jeweils die rechte Figurenhälfte) und andererseits eine ganz gesteckte Vollraststellung (jeweils die linke Hälfte der Fig. 1, 5, 7, 8) gewährleistet sind. In der bereits gegen Lösen arretierten Vorraststellung liegt eine derart unvollständige Abdichtung vor, daß im Falle einer Druckbeaufschlagung mit einem Druckmedium, insbesondere Druckluft, ein akustisch wahrnehmbares Leckgeräusch erzeugt wird. Es handelt sich hierbei um eine definiert begrenzte Undichtigkeit bzw. eine durch die Anordnung der in einer Ringnut 14 des einen Kupplungsteils - in den dargestellten Ausführungsbeispielen der Fig. 1 bis 7 des Steckerteils 4 und gemäß Fig. 8 des Gehäuseteils 2 - sitzenden Umfangsdichtung 10 relativ zu dem jeweils anderen Gehäuseteil bewirkte Bildung eines "Drosselspaltes", wodurch das Druckmedium entsprechend der eingezeichneten Pfeile 16 dosiert ausströmt und dabei ein Leckgeräusch, insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall die Steckkupplung durch weitergehendes Stecken in die Vollraststellung überführt werden kann. Die genaue Ausgestaltung der Verriegelungseinrichtung 12 ist nicht Gegenstand der vorliegenden Erfindung und wird daher hier auch nicht genauer erläutert, zumal es hierfür die verschiedenartigsten Ausführungsvarianten gibt. Beispielsweise wird diesbezüqlich auf die älteren deutschen Patentanmeldungen der Anmelderin DE-A-195 22 052, DE-A-195 23 930, DE-A-195 23 831, DE-A-195 23 833 sowie auch auf die korrespondierenden EP-Anmeldungen EP-A-0 748 975, EP-A-0 751 330, EP-A-0 751 332 und EP-A-0 751 331 verwiesen sowie bezüglich der Ausführung nach Fig. 8 auf die DE-A-196 21 535. Alternativ zu den dargestellten, jeweils eine formschlüssige Rastung bewirkenden Ausführungen der Verriegelungseinrichtung 12 ist es ebenfalls möglich, eine Vorarretierung hauptsächlich durch Kraft- oder Kraftformschluß und dabei nur die Vollarretierung durch Formschluß-Rastung vorzusehen. Diesbezüglich wird auf die DE-A-196 23 995 Bezug genommen.

Die in der Ringnut 14 des einen Kupplungsteils sitzende Umfangsdichtung 10 wirkt mit einer umfänglichen Dichtfläche 18 des anderen Kupplungsteils zusammen. In den dargestellten Ausführungsbeispielen der Fig. 1 bis 7, bei denen die Umfangsdichtung 10 in der Ringnut 14 des Steckerteils 4 sitzt, ist die Dichtfläche 18 von einem Abschnitt der Innenumfangsfläche der Aufnahmeöffnung 8 des Gehäuseteils 2 gebildet.

Alternativ dazu ist es gemäß Fig. 8 ebenfalls möglich, die Umfangsdichtung 10 in einer inneren Ringnut 14 des Gehäuseteils 2 anzuordnen, wobei die Umfangsdichtung 10 in diesem Fall mit einer am Außenumfang des Steckerschaftes 6 vorhandenen Dichtfläche 18 zusammenwirkt.

Erfindungsgemäß ist nun vorgesehen, daß der Bereich der Umfangsdichtung 10 und/oder der Dichtfläche 18 derart ausgebildet ist, daß die in der Ringnut 14 des einen Kupplungsteils (4 oder 2) sitzende Umfangsdichtung 10 bereits in der Vorraststellung (rechte Figurenhälfte in Fig. 1, 5, 7 und 8) über umfänglich verteilt voneinander beabstandet angeordnete Anlagestellen 20 in radialer Richtung an dem anderen Kupplungsteil (2 oder 4) anliegt, wobei jeweils in Umfangsrichtung zwischen den Anlagestellen 20 axiale Leckagepfade 22 gebildet sind. Aufgrund dieser erfindungsgemäßen Ausgestaltung ist die Umfangsdichtung 10 bereits in der Vorraststellung bereichsweise in der Ringnut 14 gekammert, d.h. in radialer Richtung derart eingespannt, daß auch bei einer auftretenden Leckageströmung (Pfeile 16) die Umfangsdichtung 10 sicher in der Ringnut 14 gehalten wird und nicht etwa herausgerissen werden kann.

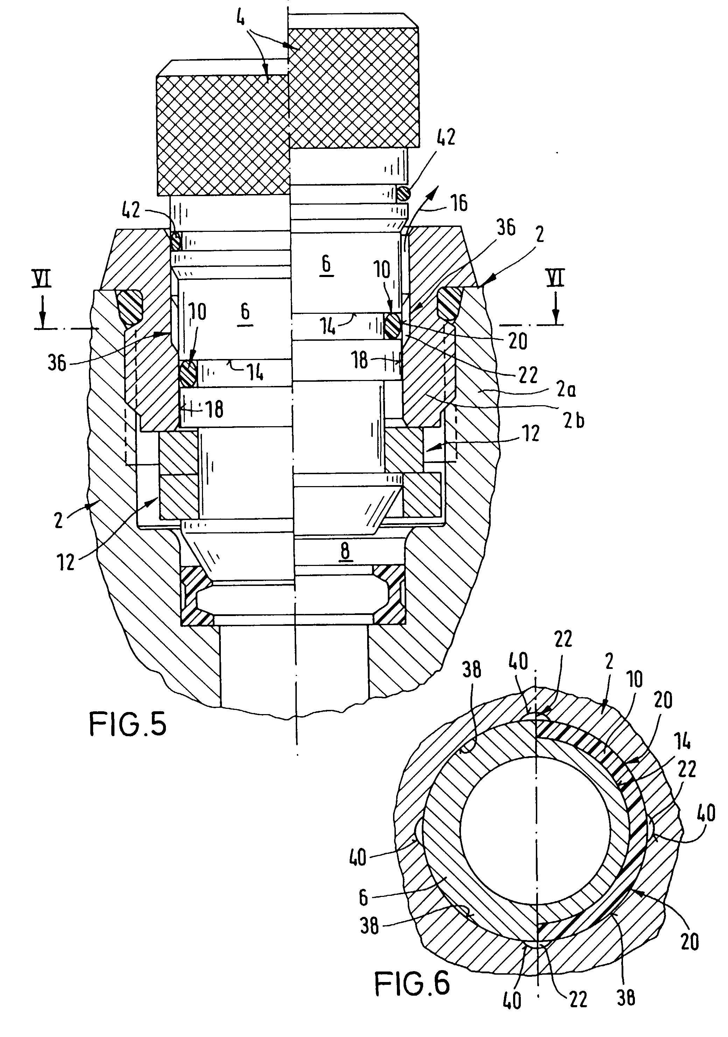

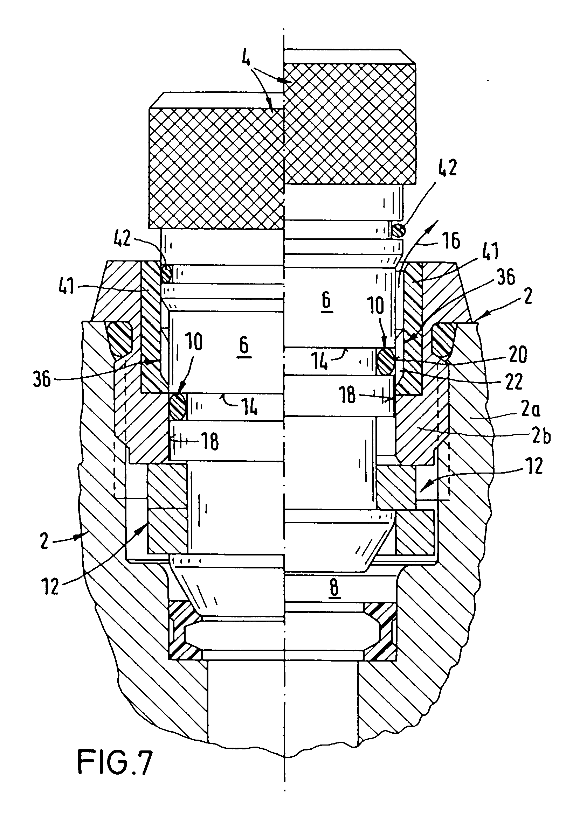

Im Ausführungsbeispiel nach Fig. 1 bis 4 sind die Anlagestellen 20 und die Leckagepfade 22 durch eine spezielle Ausgestaltung der Umfangsdichtung 10 gebildet. Im Falle der Ausführungsformen nach Fig. 5 und 6 sowie nach Fig. 7 ist alternativ hierzu jeweils eine spezielle Ausgestaltung des die Dichtfläche 18 aufweisenden Kupplungsteils, gemäß Fig. 5 bis 7 speziell des Gehäuseteils 2 bzw. gemäß Fig. 8 und 9 speziell des Steckerteils 4, vorgesehen.

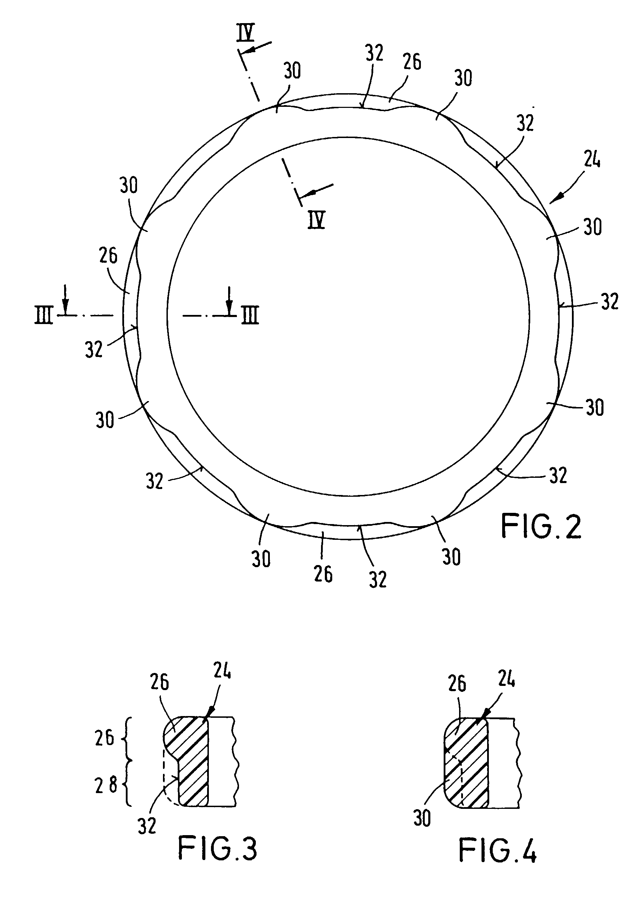

Im folgenden soll zunächst die erste Ausführungsform nach Fig. 1 bis 4 genauer erläutert werden. Hierbei besteht die Umfangsdichtung 10 aus einem elastischen Profilring 24 (siehe hierzu insbesondere Fig. 2 bis 4), der in zwei axial benachbarte Bereiche unterteilt ist, und zwar in einen Dichtbereich 26 mit einem über den Ringumfang hinweg im wesentlichen konstanten, als Dichtring wirkenden Ringquerschnitt sowie einen Leckagebereich 28 aus einander in Umfangsrichtung abwechselnden, die Anlagestellen 20 bildenden Anlageabschnitten 30 und zwischen diesen gebildeten, radialen, in der Vorraststellung die Leckagepfade 22 bildenden Leckageaussparungen 32. Vorzugsweise entspricht hierbei die axiale Höhe des Dichtbereichs 26 etwa der Höhe des Leckagebereichs 28 (s. Fig. 3). Ferner ist es besonders vorteilhaft, wenn der Durchmesser eines von den Anlageabschnitten 30 definierten Kreises dem Durchmesser des Dichtbereiches 26 entspricht (s. Fig. 2, 3 und 4), da hierdurch ein sehr einfaches, problemloses Überführen von der Vorraststellung in die Vollraststellung möglich ist. Wie in Fig. 1 zu erkennen ist, ist der Profilring 24 in der Vorraststellung (rechte Hälfte) mit dem Dichtbereich 26 im Bereich eines zwischen dem Steckerschaft 6 und der Aufnahmeöffnung 8 gebildeten, an die Dichtfläche 18 axial angrenzenden, erweiterten Ringspaltes 34 und mit dem Leckagebereich 28 im Bereich der in der Vollraststellung (linke Figurenhälfte) mit dem Dichtbereich 26 dichtend zusammenwirkenden Dichtfläche 18 angeordnet. Hierdurch liegt die Umfangsdichtung 10 in der Vollraststellung über den gesamten Umfang mit dem Dichtbereich 26 an der Dichtfläche 18 dichtend an.

Gemäß Fig. 2 sind bevorzugt acht gleichnmäßig umfangsverteilte Anlageabschnitte 30 und dementsprechend auch acht Leckageaussparungen 32 vorgesehen, wobei die Anlageabschnitte 30 zweckmäßigerweise "noppenartig" ausgebildet sind. Es kann aber auch eine geringere oder größere Anzahl von Anlageabschnitten 30 festgelegt werden; es sollten aber mindestens drei Anlageabschnitte 30 vorhanden sein, die sich dann jeweils über einen größeren Umfangsbereich - entsprechend dem Umfangsverlauf der Dichtfläche 18 - erstrekken können.

Bei der dargestellten Ausführung mit in der äußeren Ringnut 14 des Steckerschaftes 6 sitzender Umfangsdichtung 10 sind der Dichtbereich 26 und der Leckagebereich 28 mit den Anlageabschnitten 30 und den Leckageaussparungen 32 am äußeren Umfang des Profilrings 24 gebildet, und der erweiterte Ringspalt 34 ergibt sich durch eine an die Dichtfläche 18 des Gehäuseteils 2 axial angrenzende Querschnittserweiterung der Aufnahmeöffnung 8 des Gehäuseteils 2.

In einer nicht dargestellten Alternative, d.h. wenn die Umfangsdichtung bzw. der spezielle Profilring in einer inneren Ringnut der Aufnahmeöffnung des Gehäuseteils sitzt, wären der Dichtbereich und der Leckagebereich am inneren Umfang des Profilringes zu bilden. Ferner müßte der erweiterte Ringspalt durch eine an die äußere Dichtfläche des Steckerschaftes angrenzende Querschnittsreduzierung des Steckerschaftes gewährleistet werden.

Die in den Fig. 5 und 6 veranschaulichte Ausführungsform unterscheidet sich von der Ausführung nach Fig. 1 bis 4 dadurch, daß hierbei das die Dichtfläche 18 aufweisene Kupplungsteil - wie dargestellt das Gehäuseteil 2 - der Dichtfläche 18 axial benachbart einen Leckagebereich 36 mit einander in Umfangsrichtung abwechselnden Anlageabschnitten 38 und radialen Leckageaussparungen 40 aufweist. Um auch hierbei ein leichtes Überführen von der Vorraststellung in die Vollraststellung zu ermöglichen, ist es vorteilhaft, wenn der Durchmesser eines von den Anlageabschnitten 38 definierten Kreises dem Durchmesser der Dichtfläche 18 entspricht. In Fig. 6 ist ein Querschnitt durch den Leckagebereich 36 dargestellt, woraus ersichtlich ist, daß in der Vorraststellung (rechte Figurenhälfte) die Umfangsdichtung 10 eingespannt in der Ringnut 14 gehalten wird. Bei dieser Ausführungsform kann vorteilhafterweise ein "normaler" Dichtring, z.B. O-Ring, verwendet werden.

Gemäß Fig. 6 sind bevorzugt vier gleichmäßig über den Umfang verteilt angeordnete Anlageabschnitte 38 vorgesehen, die sich vorzugsweise jeweils über einen Kreisbogen von nur wenig weniger als 90° erstrecken, so daß die Leckageaussparungen 40 relativ klein bzw. eng sind, was vorteilhaft für die Erzeugung des gewünschten Leckgeräusches sein kann. Die Erfindung ist natürlich nicht auf die genannte Anzahl von Anlageabschnitten 38 und Aussparungen 40 beschränkt.

Bei der Ausführung nach Fig. 5 und 6 sind die Anlageabschnitte 38 und die Leckageaussparungen 40 unmittelbar durch entsprechende Ausgestaltung (Formung) des jeweiligen Kupplungsteils - wie dargestellt z. B. des Gehäuseteils 2 - gebildet ("einteilige Ausführung").

Alternativ dazu ist in Fig. 7 eine Ausführungsvariante veranschaulicht, bei der die Anlageabschnitte 38 und die Leckageaussparungen 40 durch ein zusätzliches, hülsenartiges und vorzugsweise aus Kunststoff bestehendes Bauteil 41 - wie dargestellt z. B. eine in das Gehäuseteil 2 eingesetzte Buchse - gebildet sind ("zweiteilige Ausführung"). Im übrigen entspricht diese Ausführung nach Fig. 7 derjenigen der Fig. 5 und 6.

Gemäß Fig. 8 und 9 kann alternativ zu den in Fig. 5 und 6 sowie 7 veranschaulichten Ausführungsformen die Umfangsdichtung 10 auch in der Innenringnut 14 innerhalb der Aufnahmeöffnung 8 des Gehäuseteils 2 sitzen, wobei die Dichtfläche 18 und der Leckagebereich 36 am Außenumfang des Steckerschaftes 6 gebildet sind. Wie dargestellt, ist der Leckagebereich 36 bevorzugt durch eine umfangsgemäße Rändelung gebildet, die insbesondere aus im wesentlichen axial verlaufenden, stegartigen Erhebungen 50 und jeweils dazwischenliegenden, rillenartigen, die Leckagepfade bildenden Vertiefungen 52 besteht. Hierbei definiert der Leckagebereich 36 mit den Erhebungen 50 einen Umfangskreis, dessen Durchmesser vorzugsweise derart geringfügig kleiner als der Durchmesser der Dichtfläche 18 ist, daß die Umfangsdichtung 10 einerseits in der Vollarretierstellung (linke Hälfte der Fig. 8) durch Anlage an der Dichtfläche 18 mit elastischer Querschnittsformveränderung in die Innenringnut 14 gepreßt wird, andererseits aber in der Vorarretierstellung (rechte Hälfte der Fig. 8) durch Anlage an dem Leckagebereich 36 im wesentlichen ohne Verformung lediglich in der Innenringnut 14 gehalten und so gegen strömungsbedingtes Herausbewegen gesichert wird.

Ergänzend sei noch erwähnt, daß zusätzlich zu der die eigentliche Druckabdichtung bewirkende Umfangsdichtung 10 vorzugsweise eine Schmutzdichtung 42 vorgesehen ist, die in der Vollraststelung (linke Hälfte der Fig. 1 und 5) die äußere Mündungsöffnung der Aufnahmeöffnung 8 so verschließt, daß ein Eindringen von Schmutz, Staub, Feuchtigkeit und dergleichen vermieden wird. Vorzugsweise ist diese Schmutzdichtung 42 ebenfalls in einer äußeren Ringnut des Steckerschaftes 6 gelagert. Bei der Ausführungsform nach Fig. 8 sind dabei spezielle Maßnahmen vorgesehen, um die Schmutzdichtung 42 als "elastisches Anschlagelement" auszubilden, welches bei Erreichen der Vollarretierstellung einen erfaßbaren (fühlbaren) Anstieg der Steckkraft bewirkt (Steckkontrolle). Hierzu wird auf die DE-Gebrauchsmusteranmeldung 296 10 496.5 verwiesen.

Ferner ist bevorzugt vorgesehen, daß zwecks Lösbarkeit des durch die Verriegelungseinrichtung 12 arretierten Steckerteils 4 das Gehäuseteil 2 derart aus zwei lösbar verbundenen Teilen, einem Basisteil 2 a und einem bevorzugt als Überwurfschraube ausgebildeten Einsatzteil 2 b, besteht, daß nach Lösen des Einsatzteils 2 b vom Basisteil 2 a das Steckerteil 4 zusammen mit einem Bestandteil der Verriegelungseinrichtung 12 und dem Einsatzteil 2 b entnommen werden kann. In diesem Fall ist in der Ausführung nach Fig. 7 das zusätzliche Bauteil 41 bzw. die Buchse mit dem Einsatzteil 26 verbunden ("zweiteilige Ausführung" des Einsatzteils 2 b).

## Patentansprüche

1. Steckkupplung für insbesondere pneumatische Druckmittelsysteme, bestehend aus zwei Kupplungsteilen, und zwar einem Gehäuseteil (2) und einem Steckerteil (4), wobei das Steckerteil (4) mit einem Steckerschaft (6) über mindestens eine in einer Ringnut (14) des einen Kupplungsteils (4) sitzende und mit einer umfänglichen Dichtfläche (18) des anderen Kuplungsteils (2) zusammenwirkende Umfangsdichtung (10) abgedichtet in eine Aufnahmeöffnung (8) des Gehäuseteils (2) einsteckbar und mittels einer Verriegelungseinrichtung (12) gegen Lösen arretierbar ist, wobei die Verriegelungseinrichtung (12) derart ausgebildet ist,daß eine teilgesteckte Vorarretierstellung und eine ganz gesteckte Vollarretierstellung gewährleistet sind, wobei in der Vorarretierstellung eine derart unvollständige Abdichtung vorliegt, daß im Falle einer Druckbeaufschlagung mit einem Druckmedium, insbesondere Druckluft, eine definiert begrenzte, wahrnehmbare Leckage, insbesondere in Form eines akustisch wahrnehmbaren Leckgeräusches, auftritt, und wobei in der Vollarretierstellung über die an der Dichtfläche (18) anliegende Umfangsdichtung (10) eine vollständige, druckdichte Abdichtung vorliegt,
**dadurch gekennzeichnet,** daß der Bereich der Umfangsdichtung (10) und/oder der Dichtfläche (18) derart ausgebildet ist, daß die in der Ringnut (14) des einen Kupplungsteils (4) sitzende Umfangsdichtung (10) in der Vorarretierstellung über umfänglich verteilt voneinander beabstandet angeordnete Anlagestellen (20) in radialer Richtung an dem anderen Kupplungsteil (2) anliegt und jeweils in Umfangsrichtung zwischen den Anlagestellen (20) axiale Leckagepfade (22) gebildet sind.

2. Steckkupplung nach Anspruch 1,
**dadurch gekennzeichnet,** daß die Anlagestellen (20) und die Leckagepfade (22) durch spezielle Ausgestaltung der Umfangsdichtung (20) und/oder des die Dichtfläche (18) aufweisenden Kupplungsteils (2) gebildet sind.

3. Steckkupplung nach Anspruch 1 oder 2,
**dadurch gekennzeichnet,** daß die Umfangsdichtung (10) aus einem elastischen Profilring (24) besteht, der in zwei axial benachbarte Bereiche unterteilt ist, und zwar in einen Dichtbereich (26) mit einem über den Umfang hinweg im wesentlichen konstanten Ringquerschnitt sowie einen Leckagebereich (28) aus einander in Umfangsrichtung abwechselnden, die Anlagestellen (20) bildenden Anlageabschnitten (30) und radialen, die Leckagepfade (22) bildenden Leckageaussparungen (32).

4. Steckkupplung nach Anspruch 3,
**dadurch gekennzeichnet,** daß der Profilring (24) in der Vorarretierstellung mit dem Dichtbereich (26) im Bereich eines zwischen dem Stekkerschaft (6) und der Aufnahmeöffnung (8) gebildeten, an die Dichtfläche (18) angrenzenden, erweiterten Ringspaltes (34) und mit dem Leckagebereich (28) im Bereich der in der Vollarretierstellung mit dem Dichtbereich (26) dichtend zusammenwirkenden Dichtfläche (18) des jeweiligen Kupplungsteils (2) angeordnet ist.

5. Steckkupplung nach Anspruch 3 oder 4,
**dadurch gekennzeichnet,** daß die Umfangsdichtung (10) in einer äußeren Ringnut (14) des Steckerschaftes (6) sitzt, wobei der Dichtbereich (26) und der Leckagebereich (28) mit den Anlageabschnitten (30) und den Leckageaussparungen (32) am äußeren Umfang des Profilringes (24) sowie der erweiterte Ringspalt (34) durch eine an die Dichtfläche (18) angrenzende Querschnittserweiterung der Aufnahmeöffnung (8) des Gehäuseteils (2) gebildet sind.

6. Steckkupplung nach Anspruch 3 oder 4,
**dadurch gekennzeichnet,** daß die Umfangsdichtung in einer Innenringnut der Aufnahmeöffnung des Gehäuseteils sitzt, wobei der Dichtbereich und der Leckagebereich mit den Anlageabschnitten und den Leckageaussparungen am inneren Umfang des Profilringes sowie der erweiterte Ringspalt durch eine an die Dichtfläche angrenzende Querschnittsreduzierung des Steckerschaftes gebildet sind.

7. Steckkupplung nach Anspruch 1 oder 2,
**dadurch gekennzeichnet,** daß das die Dichtfläche (18) aufweisende Kupplungsteil (2) der Dichtfläche (18) axial benachbart einen Leckagebereich (36) mit einander in Umfangsrichtung abwechselnden Anlageabschnitten (38) und radialen Leckageaussparungen (40) aufweist.

8. Steckkupplung nach Anspruch 7,
**dadurch gekennzeichnet,** daß die Anlageabschnitte (38) und die Leckageaussparungen (40) unmittelbar durch entsprechende Formung des Kupplungsteils (2) gebildet sind.

9. Steckkupplung nach Anspruch 7,
**dadurch gekennzeichnet,** daß die Anlageabschnitte (38) und die Leckageaussparungen (40) mittelbar durch entsprechende Formung eines zusätzlichen, insbesondere hülsenartigen, mit dem Kupplungsteil (2) verbundenen Bauteils (41) gebildet sind.

10. Steckkupplung nach einem oder mehreren der Ansprüche 7 bis 9,
**dadurch gekennzeichnet,** daß die - insbesondere als O-Ring ausgebildete - Umfangsdichtung (10) in der Vorarretierstelldung im Leckagebereich (36) und in der Vollarretierstellung im Bereich der angrenzenden Dichtfläche (18) angeordnet ist.

11. Steckkupplung nach einem oder mehreren der Ansprüche 7 bis 10,
**dadurch gekennzeichnet,** daß die Umfangsdichtung (10) in einer äußeren Ringnut (14) des Steckerschaftes (6) sitzt und die Dichtfläche (18) und der Leckagebereich (36) innerhalb der Aufnahmeöffnung (8) des Gehäuseteils (2) gebildet sind.

12. Steckkupplung nach einem oder mehreren der Ansprüche 7 bis 10,
**dadurch gekennzeichnet,** daß die Umfangsdichtung (10) in einer Innenringnut (14) in der Aufnahmeöffnung (8) des Gehäuseteils (2) sitzt und die Dichtfläche (18) und der Leckagebereich (36) am Außenumfang des Steckerschaftes (6) gebildet sind.

13. Steckkupplung nach Anspruch 12,
**dadurch gekennzeichnet,** daß der Leckagebereich (36) durch eine umfangsgemäße Rändelung - insbesondere aus im wesentlichen axial verlaufenden, stegartigen Erhebungen (50) und jeweils dazwischenliegenden, rillenartigen, die Leckagepfade bildenden Vertiefungen (52) - gebildet ist.

14. Steckkupplung nach Anspruch 12 und 13,
**dadurch gekennzeichnet,** daß der die Dichtfläche (18) bildende Abschnitt des Steckerschaftes (6) einen derart geringfügig größeren Durchmesser als ein von dem Leckagebereich (36) definierter Umfangskreis aufweist, daß die Umfangsdichtung (10) in der Vollarretierstellung durch Anlage an der Dichtfläche (18) mit elastischer Querschnittsänderung in die Innenringnut (14) gepreßt und in der Vorarretierstellung durch Anlage an dem Leckagebereich (36) im wesentlichen verformungsfrei in der Innenringnut (14) gehalten wird.

## Claims

1. Plug-in coupling for pressure-medium systems, especially pneumatic systems, comprising two coupling parts, specifically a housing part (2) and a plug part (4), it being possible for the plug part (4) to be plugged into a receiving opening (8) in the housing part (2) by way of a plug shank (6) so as to be sealed via at least one circumferential seal (10), which is seated in an annular groove (14) in the one coupling part (4) and co-operate with a circumferencial sealing face (18) of the other coupling part (2), and to be locked by means of a locking device (12) against becoming detached, the locking device (12) being designed such that a partly plugged-in pre-latching position and a wholly plugged-in, fully latched position are ensured, it being the case that, in the pre-latched position, there is incomplete sealing such that, in the event of pressure being applied by a pressure medium, especially compressed air, a perceptible leakage limited in a defined manner, occurs, especially in the form of an acoustically perceptible leakage noise and, in the fully latched position, there is a complete, pressure-tight seal via the circumferential seal (10) resting on the sealing face (18),
characterized in that the region of the circumferential seal (10) and/or of the sealing face (18) is designed such that, in the pre-latched position, the circumferential seal (10), which is seated in the annular groove (14) in the one coupling part (4), rests in the radial direction on the other coupling part (2) via contact points (20) that are distributed circumferentially and arranged at a distance from one another, and in each case axial leakage paths (22) are formed in the circumferential direction between the contact points (20).

2. Plug-in coupling according to Claim 2, characterized in that the contact points (20) and the leakage paths (22) are formed by specific configuration of the circumferential seal (20) and/or of the coupling part (2) having the sealing face (18).

3. Plug-in coupling according to Claim 1 or 2, characterized in that the circumferential seal (10) consists of an elastic profiled ring (24), which is subdivided into two axially adjacent regions, specifically into a sealing region (26) with an annular cross-section that is essentially constant over the circumference, and a leakage region (28) made up of contact sections (30), which form the contact points (20), and radial leakage cut-outs (32), which form the leakage paths (22), the said sections alternating with one another in the circumferential direction.

4. Plug-in coupling according to Claim 3, characterized in that in the pre-latched position, the profiled ring (24) is arranged with the sealing region (26) in the region of a widened annular gap (34), which is formed between the plug shank (6) and the receiving opening (8) and adjoins the sealing face (18), and with the leakage region (28) in the region of that sealing face (18) of the respective coupling part (2) which, in the fully latched position, cooperates in a sealing manner with the sealing region (26).

5. Plug-in coupling according to Claim 3 or 4, characterized in that the circumferential seal (10) is seated in an outer annular groove (14) in the plug shank (6), the sealing region (26) and the leakage region (28) with the contact sections (30) and the leakage cut-outs (32) on the outer circumference of the profiled ring (24), as well as the widened annular gap (34), being formed by a widening of the cross-section of the receiving opening (8) in the housing part (2), adjacent to the sealing face (18).

6. Plug-in coupling according to Claim 3 or 4, characterized in that the circumferential seal is seated in an inner annular groove in the receiving opening in the housing part, the sealing region and the leakage region with the contact sections and the leakage cut-outs on the inner circumference of the profiled ring, as well as the widened annular gap, being formed by a reduction in the cross-section of the plug shank, adjacent to the sealing face.

7. Plug-in coupling according to Claim 1 or 2, characterized in that the coupling part (2) having the sealing face (18) has, axially adjacent to the sealing face (18), a leakage region (36) having contact sections (38) and radial leakage cut-outs (40) which alternate with one another in the circumferential direction.

8. Plug-in coupling according to Claim 7, characterized in that the contact sections (38) and the leakage cut-outs (40) are formed directly by appropriately shaping the coupling part (2).

9. Plug-in coupling according to Claim 7, characterized in that the contact sections (38) and the leakage cut-outs (40) are formed indirectly by appropriately shaping an additional component (41), especially one like a sleeve, which is connected to the coupling part (2).

10. Plug-in coupling according to one or more of Claims 7 to 9, characterized in that the circumferential seal (10) - which is designed in particular as an O ring - is arranged in the leakage region (36) in the pre-latched position, and in the region of the adjacent sealing face (18) in the fully latched position.

11. Plug-in coupling according to one or more of Claims 7 to 10, characterized in that the circumferential seal (10) is seated in an outer annular groove (14) in the plug shank (6), and the sealing face (18) and the leakage region (36) are formed inside the receiving opening (8) of the housing part (2).

12. Plug-in coupling according to one or more of Claims 7 to 10, characterized in that the circumferential seal (10) is seated in an inner annular groove (14) in the receiving opening (8) of the housing part (2), and the sealing face (18) and the leakage region (36) are formed on the outer circumference of the plug shank (6).

13. Plug-in coupling according to Claim 12, characterized in that the leakage region (36) is formed by circumferential knurling - especially by web-like elevations (50) that run essentially axially and flute-like depressions (52) that are each located between the elevations and form the leakage paths.

14. Plug-in coupling according to Claims 12 and 13, characterized in that that section of the plug-shank (6) which forms the sealing face (18) has a diameter that is slightly greater than a circumcircle which is defined by the leakage region (36), such that the circumferential seal (10), in the fully latched position, is pressed into the inner annular groove (14) with an elastic change in cross-section, as a result of resting on the sealing face (18) and, in the pre-latched position is held essentially without deformation in the inner annular groove (14), as a result of resting on the leakage region (36).

## Revendications

1. Raccord enfichable pour systèmes sous pression, en particulier pour systèmes pneumatiques, comprenant deux éléments de raccord, à savoir un élément de boîtier (2) et un élément de fiche (4), l'élément de fiche (4) pouvant être enfiché de manière étanche par une tige (6) dans une ouverture de réception (8) de l'élément de boîtier (2), grâce à au moins un joint d'étanchéité périphérique (10) placé dans une rainure annulaire (14) de l'un des éléments de raccord (4), et coopérant avec une surface d'étanchéité périphérique (18) de l'autre élément de raccord (2), et être verrouillé de manière indesserrable à l'aide d'un moyen de verrouillage (12), le moyen de verrouillage (12) étant réalisé de manière à assurer une position de pré-arrêt partiellement enfichée, et une position de verrouillage complet totalement enfichée, l'étanchéité étant incomplète dans la position de pré-arrêt, de manière à ce qu'en cas d'application d'une pression par un agent de pression, en particulier de l'air comprimé, il se produise une fuite perceptible, limitée de manière définie, en particulier sous forme d'un bruit de fuite acoustiquement perceptible, l'étanchéité totale à la pression étant obtenue dans la position de verrouillage complet, grâce au joint d'étanchéité périphérique (10) appliqué sur la surface d'étanchéité (18),
caractérisé en ce que la région du joint périphérique (10) et/ou de la surface d'étanchéité (18) est réalisée de manière à ce que, dans la position de pré-arrêt, le joint périphérique (10) disposé dans la rainure annulaire (14) de l'un des éléments de racord (4), soit appliqué dans la direction radiale par des points d'application (20) répartis à certains intervalles sur la périphérie, sur l'autre élément de raccord (2), et que des voies de fuite axiales (22) soient formées dans la direction périphérique, respectivement entre les points d'application (20).

2. Raccord enfichable selon la revendication 1,
caractérisé en ce que les points d'application (20) et les voies de fuite (22) sont formés grâce à un agencement particulier du joint périphérique (10) et/ou de l'élément de raccord (2) comportant la surface d'étanchéité (18).

3. Raccord enfichable selon la revendication 1 ou 2,
caractérisé en ce que le joint périphérique (10) est formé par une bague profilée élastique (24) séparée en deux régions axialement voisines, à savoir une région d'étanchéité (26) à section transversale sensiblement constante sur toute la périphérie, et une région de fuite (28) comportant alternativement dans la direction périphérique les sections d'application formant les points (20), et des évidements de fuite radiaux (32) formant les voies de fuite (22).

4. Racord enfichable selon la revendication 3,
caractérisé en ce que, dans la position de pré-arrêt, la région d'étanchéité (26) de la bague profilée (24) est agencée dans la région d'une fente annulaire élargie (34) formée entre la tige de fiche (6) et l'ouverture de réception (8) adjacente à la surface d'étanchéité (18), et sa région de fuite (28) est agencée dans la région de la surface d'étanchéité (18), qui coopére, dans la position de verrouillage complet, de manière étanche avec la région d'étanchéité (26) de l'élément de raccord respectif (2).

5. Raccord enfichable selon la revendication 3 ou 4,
caractérisé en ce que le joint périphérique (10) est disposé dans une rainure annulaire externe (14) de la tige de fiche (6), la région d'étanchéité (26) et la région de fuite (28), comportant les sections d'application (30) et les évidements de fuite (32), étant formées sur la périphérie externe de la bague profilée (24), et la fente annulaire élargie (34) étant formée par un élargissement de la section transversale adjacente à la surface d'étanchéité (18) de l'ouverture de réception (8) de l'élément de boîtier (2).

6. Raccord enfichable selon la revendication 3 ou 4,
caractérisé en ce que joint périphérique est placé dans une rainure annulaire interne de l'ouverture de réception de l'élément de boîtier, la région d'étanchéité et la région de fuite, comportant les sections d'application et les évidements de fuite, étant formés sur la périphérie interne de la bague profilée, et la fente annulaire élargie étant formée par une réduction de la section transversale de la tige de fiche, adjacente à la surface d'étanchéité.

7. Raccord enfichable selon la revendication 1 ou 2,
caractérisé en ce que l'élément de raccord (2) qui comporte la surface d'étanchéité (18) comporte, au voisinage axial de la surface d'étanchéité (18), une région de fuite (36) dans laquelle alternent, dans la direction périphérique, des sections d'application (38) et des évidements de fuite radiaux (40).

8. Raccord enfichable selon la revendication 7,
caractérisé en ce que les sections d'application (38) et les évidements de fuite (40) sont formés directement par un moulage correspondant de l'élément de raccord (2).

9. Raccord enfichable selon la revendication 7,
caractérisé en ce que les sections d'application (38) et les évidements de fuite (40) sont réalisés indirectement par un moulage correspondant d'un élément supplémentaire (41), en particulier en forme de manchon, relié à l'élément de raccord (2).

10. Raccord enfichable selon l'une ou plusieurs des revendications 7 à 9,
caractérisé en ce que le joint périphérique (10), ayant en particulier la forme d'un joint torique, est disposé dans la position de pré-arrêt dans la région de fuite (36), et dans la position de verrouillage complet, dans la région de la surface d'étanchéité adjacente (18).

11. Raccord enfichable selon l'une ou plusieurs des revendications 7 à 10,
caractérisé en ce que le joint périphérique (10) est disposé dans une rainure annulaire externe (14) de la tige de fiche (6), et que la surface d'étanchéité (18) et la région de fuite (36) sont formées à l'intérieur de l'ouverture de réception (8) de l'élément de boîtier (2).

12. Raccord enfichable selon l'une ou plusieurs des revendications 7 à 10,
caractérisé en ce que le joint périphérique (10) est disposé dans une rainure annulaire interne (14) de l'ouverture de réception (8) de l'élément de boîtier (2), et que la surface d'étanchéité (18) et la région de fuite (36) sont formées sur la périphérie externe de la tige de fiche (6).

13. Raccord enfichable selon la revendication 12,
caractérisé en ce que la région de fuite (36) est formée par un moletage périphérique, en particulier par des bosses (50) d'étendue sensiblement axiale, en forme de nervures, et par des creux (52) respectivement intercalés, en forme de rainures qui forment les voies de fuite.

14. Raccord enfichable selon la revendication 12 et 13,
caractérisé en ce que la section de la tige de fiche (6) qui forme la surface d'étanchéité (18) présente un diamètre légèrement supérieur à un cercle périphérique défini par la région de fuite (36), de manière à ce que le joint périphérique (10) soit poussé, dans la position de verrouillage complet, dans la rainure annulaire interne (14) par application sur la surface d'étanchéité (18), sa section transversale étant élastiquement modifiée, et, dans la position de pré-arrêt, maintenu sensiblement sans déformation dans la rainure annulaire interne (14) par application sur la région de fuite (36).
